Europäisches Patentamt

European Patent Office

Office européen des brevets

(11) Veröffentlichungsnummer: **0 612 999 A2**

## (12) EUROPÄISCHE PATENTANMELDUNG

(21) Anmeldenummer: **94100399.8**

(22) Anmeldetag: **13.01.94**

(51) Int. Cl.5: **G01N 25/18**

(30) Priorität: **25.01.93 DE 4301987**

(43) Veröffentlichungstag der Anmeldung:
**31.08.94 Patentblatt 94/35**

(84) Benannte Vertragsstaaten:
**DE FR GB**

(71) Anmelder: **Sölter, Nicolai**

Schumannstrasse 44 b
D-28790 Schwanewede (DE)

(72) Erfinder: **Der Erfinder hat auf seine Nennung verzichtet**

(54) **Apparat und Verfahren zur Bestimmung der spezifischen Wärmekapazität mittels Wärmepuls und gleichzeitige Ermittlung der Temperaturleitfähigkeit.**

(57) Die Erfindung betrifft ein Verfahren zur kontaktlosen Bestimmung der spezifischen Wärmekapazität, bei dem gegen den Prüfkörper und eine Referenzprobe ein Einzelpuls oder eine Pulsfolge eines Strahls oder mehrerer elektromagnetischer Strahlen geworfen werden und bei denen sowohl die Wirkung der zeitlich induzierten Prüfkörpertemperatur als vom Körper ausgehende Infrarotstrahlung als auch die reflektierte Strahlung gemessen wird, damit unter Berücksichtigung der Masse oder Dichte des Prüfkörpers die spezifische Wärmekapazität gegen eine Referenzprobe bestimmt werden kann und gleichzeitig die Temperaturleitfähigkeit.

Abb. 1

Die Erfindung betrifft ein Verfahren zur kontaktlosen Bestimmung der spezifischen Wärmekapazität (SWK), bei dem gegen den Prüfkörper und gegen eine Referenzprobe ein Einzelpuls oder eine Pulsfolge eines Strahls oder mehrerer elektromagnetischer Strahlen geworfen werden und bei denen sowohl die Wirkung der zeitlich induzierten Prüfkörpertemperatur als vom Körper ausgehende Infrarotstrahlung als auch die reflektierte Strahlung gemessen wird, damit unter Berücksichtigung der Masse oder Dichte des Prüfkörpers die spezifische Wärmekapazität gegen eine Referenzprobe bestimmt wird und gleichzeitig die Temperaturleitfähigkeit.

Die Erfindung betrifft auch eine Vorrichtung zur Durchführung des bezeichneten Verfahrens bestehend aus einer Strahlungsquelle, einer Probenhalterung, einer Referenzprobe, einem oder mehreren Hochgeschwindigkeitspyrometern, einer Vorrichtung zur Messung des relativen oder absoluten Emissionsgrades der Probenoberflächen, einer Analog-Elektronik und einer Steuerungs- und Datenerfassungseinrichtung.

Weiter betrifft die Erfindung verschiedene Anwendungen für unterschiedliche Werkstoffe, bei denen das Meßgerät zur Messung der SWK, zur Qualitätssicherung, Prozeßkontrolle und Werkstoffoptimierung in besonders vorteilhafter Weise einsetzbar ist.

Instationäre thermische Meßmethoden eignen sich sehr gut, die Temperaturleitfähigkeit (TLF) eines Werkstoffs zu bestimmen. Das Wärmepulsverfahren (Flash Diffusivity) mit einem einzelnen Anregungspuls gestattet es, bis über 2000 °C im Hochtemperaturbereich die TLF in Abhängigkeit von der Temperatur oder der Zeit zu bestimmen. Eine Apparatur enthält eine Strahlungsquelle (vorzugsweise Laser oder Xenon-Entladungslampe) zum kurzzeitigen Erwärmen der Probe, einen Temperatursensor mit nachgeschalteter analoger und digitaler Elektronik und eine Datenverarbeitungsanlage. Sollen Messungen bei erhöhten Temperaturen oder bei Temperaturen unter Raumtemperatur durchgeführt werden, so wird ein Ofen oder Kryostat verwendet. Diese Vorrichtung ist in Temperatur und Atmosphäre steuerbar, verfügt über gegenüberliegende optische Eintritts- und Austrittsfenster, ein Thermoelement oder ein Pyrometer zur Bestimmung der Temperatur in der Probenkammer, ein Probenhalter im Inneren für die zu untersuchende Probe, weiter eine Strahlungsquelle (z.B. Laser) nahe dem Eintrittsfenster, die auf die Probeoberfläche gerichtet ist und über einen Temperatursensor (Pyrometer), der am Austrittsfenster angeordnet ist, um die Wärmestrahlung der Probenrückseite zu empfangen. Die Ofen- und Probentemperatur, der Temperaturanstieg an der Probenrückseite aufgrund des Wärmepulses an der Probenvorderseite und der zeitliche Verlauf der Intensität der Strahlungsquelle werden in ein Meßdatenerfassungssystem mit nachgeschalteter Datenverarbeitungsanlage eingespeist, um die TLF zu berechnen und die Meßdaten abzuspeichern.

Das Umrechnen der zeitabhängigen Temperaturanstiege in die TLF geschieht mittels eines Programms, welches auf folgender physikalischer Beziehung basiert:

$$TLF = 0.1388 \cdot 1^2 / t_{1/2} \qquad (1)$$

Hierbei ist 1 die Probendicke und $t_{1/2}$ die Zeitdauer vom Beginn der Wärmepulses bis zur Hälfte des maximalen Temperaturanstieges an der Probenrückseite. Die Wärmeleitfähigkeit (WLF) ergibt sich aus der Gleichung

$$WLF = TLF \cdot SWK \cdot Dichte \qquad (2)$$

Ein Gerät zur Bestimmung der TLF wird z.B. von der Firma Compo-Therm in D-2808 Syke als Laserpulssystem für erhöhte Temperaturen angeboten und ist kurz beschrieben in der Zeitschrift "Kontrolle", Juni 1990, und als Xenonpulssystem für die Qualitätssicherung bei Raumtemperatur, dargestellt in der "EPP" Nr. 205, November 1991, beide Konradin Verlag.

Diese Geräte eignen sich zur gleichzeitigen Bestimmung der Temperatur und Zeitabhängigkeit der TLF von Festkörpern und Flüssigkeiten und der Dichte/Volumenänderung (Patent P41 31 040.3) aufgrund von thermisch induzierten Prozessen im Werkstoff. Eine Übersicht über die Anwendungsmöglichkeiten gibt die Veröffentlichung "Thermisches Meßverfahren zur Prozeßkontrolle an Bauteilen und Schichten", H.-J. Sölter, VDI Berichte Nr. 917, 1992.

Ein Nachteil dieses Meßverfahrens ist, daß die WLF bis jetzt nur über die separate Ermittlung der SWK und der Dichte mit anderen Meßverfahren unter Verwendung von Gleichung 2 möglich ist.

In der Literatur sind Ansätze zur Messung der SWK mit dem Wärmepulsverfahren bekannt (z.B. Evaluation of Errors Incurred in Determining Thermal Properties by Laser Flash, T. Kumuda, K. Kobayasi, J. of nucl. Sci and Techn., 1976, 13(6), p. 315-320), bei denen eine Referenzprobe zur Ermittlung der Wärmemenge verwendet wird. Die Vorder- und Rückseite der Referenzprobe und der Meßprobe werden dünn (wenige Mikrometer) beschichtet, um ein definiertes Absorptions- und Emissionsvermögen einzustellen, damit einerseits von beiden Proben die gleiche Wärmemenge aufgenommen wird und damit andererseits die dadurch erfolgende Temperaturerhöhung mit einem berührenden oder berührungslosen Sensor exakt bestimmt werden kann. Absorptions- und Emissionsvermögen hängen jedoch von der Zusammensetzung und dem Aufbau des Schichtmaterials, von der Struktur der darunterliegenden Probenoberfläche, von der Temperatur und anderen Einflußgrößen ab, so daß dieses Verfahren bis jetzt keine reproduzierbaren Messungen der SWK für beliebige Werkstoffe ermöglicht.

Die Verwendung von Wärmeabsorptionscheiben (Heat Capacity Measurement of Nuclear Materials by Laser Flash Method, Y. Takahashi, J. of nucl. Mat. 51 (1974), p. 17-23) zur Einstellung eines festen Emissionsgrades setzen eine aufwendige Probenherstellung vorzugsweise mit Leitsilber als "Klebstoff" zur Verringerung von Wärmeübergängen zwischen Wärmeabsorptionsscheibe und eigentlichem Prüfkörper voraus. Die wesentlichen Nachteile sind, daß der temperaturabhängige Emissionsgrad der Absorptionsscheiben bekannt sein muß und ebenso die SWK des Absorptionsscheiben-Materials und des Leitsilbers. Da zur Ermittlung der SWK die Dichte bzw. Masse benötigt wird, wird vorausgesetzt, daß bei erhöhten Temperaturen und wiederholten Messungen sich weder die Zusammensetzung der beteiligten Werkstoffe der Absorptionsscheibe und des "Klebstoffs" verändert, noch die Struktur der Oberfläche verändert wird. Dieses Verfahren kann nur maximal bis zum Schmelzpunkt des "Klebstoffs" eingesetzt werden. Wird nun die Temperatur in der Probenkammer verändert, so kann sich der Emissions- und Absorptionsgrad in unvorhersehbarer Weise (Abdampfen, Kontamination) ändern, so daß dieses zu großen Abweichungen bei der Bestimmung der SWK führt und dieses Verfahren damit unbrauchbar wird.

Quotientenpyrometer (oder Zweifarbenpyrometer) lassen sich zur direkten Bestimmung der Temperatur nicht einsetzen, da deren Temperaturbereich erst ab ca. 500 °C beginnt, da die Abtastraten für Pyrometer für das Wärmepulsverfahren insbesondere für dünne gut wärmeleitende Proben-Werkstoffe wie Kupfer oder AIN nicht hoch genug sind, da sich für einen weiten Temperaturbereich im allgemeinen keine geeigneten 2 Wellenlängen angeben lassen, für die die Temperaturbestimmung genau genug ist, und da sich insbesondere bei bunten Strahlern (metallischen Proben) die Intensitäts-Verhältnisse der Wellenlängen beliebig ändern können.

Eine Alternative besteht darin, Bandpyrometer zu verwenden und die Strahlungseigenschaften von Oberflächen mit einem gesonderten Verfahren zu bestimmen. In der Literaturstelle "Emissivity and Temperature Measurement", T.J. Quinn, Rev. Int. Hautes Temper. et Refrat., 1970, t.7, No. 3, p. 180-191, werden in einer Übersicht Möglichkeiten zu Messung des Emissionsvermögens u.a. auch mittels Reflektion an Oberflächen diskutiert.

Ein Vorteil der Wärmepulsmethode zur Bestimmung der SWK sind die sehr kurzen Meßzeiten. Im Vergleich mit bekannten anderen Standard-Verfahren, wie Diffential Scanning Calorimeter, Drop Calorimeter usw. ergeben sich daraus neue Anwendungen in der Qualitätssicherung und Prozeßkontrolle.

Der Erfindung liegt die Aufgabe zugrunde, die bekannten Ansätze so weiterzubilden, daß sich ein zuverlässiges Meßverfahren zur Bestimmung der SWK ergibt, das kurze Meßzeiten zuläßt, das gleichzeitig mit einer einzigen Messung die Bestimmung von SWK und TLF zuläßt, mit der Möglichkeit auch die WLF bei bekannter Masse/Dichte zu ermitteln, das bei unterschiedlichen Probentemperaturen, Probenkammer-Atmosphären und Vakuum einsetzbar ist und das sich für Werkstoffoptimierung in der industriellen Qualitätssicherung und Prozeßkontrolle verwenden läßt.

Weiter besteht die Aufgabe der Erfindung darin, verfahrensmäßige Lösungen aufzuzeigen, bei denen das erfindungsgemäße SWK-Meßgerät vorzugsweise als Lösungsmerkmal eingesetzt werden kann.

In der Lösung der Aufgabe der Erfindung zeichnet sich das erfindungsgemäße SWK-Meßgerät mit den bekannten Komponenten Strahlungsquelle, Probenhalter, Probenkammer, Temperatursensor, Elektronik, Meßwerterfassungs - und Datenverarbeitungseinheit dadurch aus, daß es ein Meßsystem enthält, mit dem das Emissions-, Absorptions- und Reflektionsvermögen von Probenoberflächen absolut oder relativ zu einer Referenzprobe bestimmt werden kann. Die Meßproben können aus Keramik, Metall, Kunststoff, Glas, Flüssigkeiten oder Composites bestehen.

Ein Pyrometer, welches sich am Austrittsfenster befindet, dient bei der Bestimmung der TLF zur Detektion des relativen Temperaturanstieges (ca.1-10K) an der Probenrückseite. Durch die Kalibrierung des Pyrometers für den gewählten Temperaturbereich läßt sich vor der Messung der TLF die absolute Probentemperatur bestimmen, wenn der Emissiongrad der Probenrückseite bekannt ist. Eine Beschichtung der Probe zur Einstellung eines definierten Emissionsgrades ist nicht erforderlich. In das Pyrometer integriert ist eine Strahlungsvorrichtung, die eine dem Temperaturbereich angepaßte Strahlung auf die Probenrückseite wirft, welche zum Teil reflektiert und auf den Detektor des Pyrometers zur Auswertung geworfen wird. Je höher der Reflektionsgrad r der Probenrückseite ist, um so kleiner ist deren Absorption a bzw. deren Emissionsvermögen $\epsilon$ nach folgender Beziehung

$$\epsilon = a = 1 - r \qquad (3)$$

Die Intensität der Strahlungsvorrichtung ist zur Auswertung von Gleichung 3 normiert. Vorhandene Transmission kann bei transluzenten Werkstoffen durch eine dünne optisch dichte Beschichtung auf der Probenoberfläche unterdrückt werden. Der ermittelte Emissionsgrad wird verwendet, um bei beliebigen Temperaturen in der Probenkammer die absolute Höhe des Temperaturanstieges an der Probenrückseite zu bestimmen.

Dieses Verfahren wird ebenfalls an einer Referenzprobe durchgeführt, die eine bekannte SWK aufweist. Meß- und Referenzproben können sich auf einem Probenkarussel befinden oder auch in nacheinander ablaufenden Meßzyklen untersucht werden.

Die Auslösung der Meßstrahlung erfolgt rechnergesteuert und kann als einzelner Ein- und Ausschaltvorgang durchgeführt werden oder periodisch mit einer Choppervorrichtung. Als Meßsignal wird die Differenz des Detektorsignals zwischen ein- und ausgeschalteter Meßstrahlung verwendet. Die Intensität der Meßstrahlung ist veränderlich, damit das Signal/Rauschverhältnis am Pyrometer einstellbar ist.

Das erfindungsgemäße Verfahren zeichnet sich weiter dadurch aus, daß am Eintrittsfenster für die Anregungsstrahlung, durch die der Wärmepuls auf der Probenvorderseite erzeugt wird, wird ein Reflektions-Strahlungssensor angebracht, der die reflektierte Anregungsstrahlung des Wärmepulses detektiert, verstärkt und der Auswertungseinheit zuführt, um nach Gleichung 3 den Absorptionsgrad zu bestimmen. Die Anregungsstrahlung stellt die elektromagnetische Strahlung vorzugsweise einer Entladungslampe oder eines Lasers dar. Der Reflektions-Strahlungssensor ist exakt auf den Wellenlängenbereich des Anregungsstrahls abgestimmt, vorzugsweise durch Einsatz von optischen Filtern.

Die Detektion der Reflektionsstrahlung erfolgt entweder durch einen Auskopplungsspiegel im Strahlengang des Anregungsstrahls oder durch eine Anordnung des Reflektions-Strahlungssensors unter einem vorgegebenen Winkel.

Eine separate Messung ergibt die maximale Strahlungsintensität der Anregungsstrahlung, die zur Normierung des Reflektionsvermögens herangezogen wird.

Weiter zeichnet sich das Verfahren dadurch aus, daß alternativ ein Strahlungssensor verwendet wird, der nicht nur die Anregungsstrahlung aufnimmt, sondern ebenfalls Strahlung in einem Wellenlängenbereich, der sich durch den Wärmepuls der Anregungsstrahlung ergibt. Damit kann zusätzlich zum Reflektionsvermögen die zeitliche Temperaturerhöhung auf der Probenvorderseite aufgezeichnet werden. Der Strahlungsdetektor am Eintrittsfenster kann demnach auch als Pyrometer ausgebildet sein. Typische Pulslängen bei einem Festkörper-Pulslaser liegen bei ca. 800μs und für andere Laser/Strahlungsquellen auch kürzer, so daß die Abtastzeiten im Mikro- und Nanosekundenbereich für Pulslängen liegen können.

Für eine weitere Ausbildung des erfindungsgemäßen Verfahrens vornehmlich bei der gleichzeitigen Bestimmung der SWK und TLF im Niedrig-Temperaturbereich, vorzugsweise von Raumtemperatur bis ca. 200°C und für Werkstoffe aus der Elektronik, wird das Emissionsvermögen mittels einer Heizvorrichtung bestimmt. Bei dieser Meßvorrichtung wird der Anregungsstrahl durch eine Xenon-Entladungslampe erzeugt und die Probenkammer auf den verringerten Temperaturbereich angepaßt oder vollständig weggelassen. Damit ergibt sich ein kompaktes Meßgerät, das sich mobil einsetzen läßt.

Die Meßprobe und Referenzprobe werden zur Bestimmung des Emissionsgrades gemeinsam auf eine in der Temperatur einstellbaren Heizplatte montiert, so daß beide Proben dieselbe Temperatur aufweisen. Die Vorrichtung ist beweglich (drehbar, verfahrbar), so daß vom Pyrometer die Infrarot-Strahlung jeweils der Probenvorder- und rückseiten im Temperaturmeßbereich bestimmt werden. Aufgrund der mit einem kontaktierenden Sensor gemessenen bekannten Temperatur der Probenoberfläche wird das Emissionsvermögen bestimmt.

Das Reflektionsvermögen der Oberfläche für das Strahlungsspektrum der Xenonentladungslampe wird mit einem Reflektions-Strahlungs-detektor aufgenommen, der auf das Strahlungswellenlängenband der Entladungslampe abgestimmt ist, und nach Gleichung 3 ausgewertet.

Die Meßdaten werden für die beschriebenen Verfahren elektronisch aufbereitet und zwecks Auswertung einem Rechner zugeführt, der die Temperaturerhöhung für die Meß- und Referenzprobe ermittelt.

Die in die Meßprobe eingebrachte Wärmemenge wird mit Hilfe der Referenzprobe bestimmt. Zur Berechnung der SWK wird bei identischen Absorptionsflächen der Probenvorderseite für den Anregungsstrahl folgende Gleichung verwendet:

$$SWK_{mP} = \frac{a_m \cdot \epsilon_r \cdot T_{Mr} \cdot M_r \cdot l_r}{a_r \cdot \epsilon_m \cdot T_{Mm} \cdot M_m \cdot l_m} \cdot c_{pr} \qquad (4)$$

SWK: Spezifische Wärmekapazität, a: Absorptionskoeffizient, $\epsilon$: Emissionsgrad, $T_M$: Maximaler Temperaturanstieg auf der Probenrückseite, D: Dichte, 1: Probendicke, M: Masse, Indices m: Meßprobe, r: Referenzprobe

Wenn die Absorptionsflächen der Meß- und Referenzprobe nicht gleich sind, muß statt der Masse die Dichte D verwendet werden.

Die Wärmeleitfähigkeit ergibt sich aus der Gleichung

$$WLF = \frac{0.1388 \cdot l_m \cdot a_m \cdot \epsilon_r \cdot T_{Mr} \cdot D_r \cdot l_r \cdot c_{pr}}{t_{1/2} \cdot a_r \cdot \epsilon_m \cdot T_{Mm}} \qquad (5)$$

Typische Anwendungsbeispiele für die simultane Bestimmung der TLF und SWK sind bei der Optimierung von Sinterprozessen bei Metallen und Keramiken insbesondere Substratkeramiken zu finden. Hierbei werden Sinter-Temperaturprogramme durchfahren, um mittels gleichzeitiger Bestimmung TLF und SWK Rückschlüsse auf den Ablauf der Gefügeausbildung und somit die Güte des Sinterprozesses zu ziehen.

Das Verfahren kann auch während oder nach Beendigung der Produktion vorzugsweise von Keramiksubstraten aus der Elektronik als Qualitätssicherungsverfahren eingesetzt werden. Die thermopyhsikalischen Größen SWK, TLF, WLF und Dichte sind wichtigen Größen bei der Beurteilung der Einsatzgrenzen von wärmebeaufschlagten Elektronikbauteilen. Auch Diamantschichten bzw. -scheiben lassen sich mit diesem neuen Verfahren untersuchen. Dabei können die Substrate beschichtet oder unbeschichtet vorliegen.

Ein weiteres Einsatzgebiet liegt in der Herstellung von Keramikfliesen und anderen Keramik-Bauteilen. Diese müssen vor dem Brennen durch Pressen oder Schlickern möglichst gleichmäßig, d.h. ohne nennenswerte Dichteschwankungen hergestellt werden, da es sonst beim Brennen zu ungleichmäßigen Schwindungen kommt. Mittels Messung der SWK und TLF können kritische Bereiche detektiert werden.

Amorphe Metalle werden als dünne Bänder hergestellt. Auch hier läßt sich das Verfahren zur simultanen Messung der Eigenschaften TLF und SWK einsetzen. Änderungen in der Mikrostruktur, die für die Ausbildung der Eigenschaften sehr wichtig sind, und der Zusammensetzung während der Herstellung lassen sich detektieren.

Eine weitere Anwendung ist in der Bestimmung der SWK und TLF von Papier und Pappe zu finden. Papier wird mittels geheizter Kalander hergestellt. Für die Herstellung ist die während des Prozesses aufgenommene Wärmemenge, der Wärmeübergang und die Temperatur von Bedeutung. Die schnelle Ermittlung der SWK von Papier und Pappe dient der Sicherstellung einer gleichmäßigen Qualität.

Kunststoffe wie Gummi, Kautschuk, PVC und Fasermatten werden in vorzugsweise beheizten Formen oder im Spritzgußverfahren zu unterschiedlichsten Bauteilen z.B. in der Elektronik, Datenverarbeitung oder im Fahrzeug- und Maschinenbau verarbeitet. Beispielhaft sei die Herstellung von Fahrzeugarmaturen oder die Reifenherstellung genannt. Die Sicherstellung eines definierten Mischungsverhältnisses der Ausgangswerkstoffe ist für das Endprodukt von ausschlaggebender Bedeutung. Mittels der simultanen Messung der SWK und TLF können Abweichungen frühzeitig festgestellt werden. Durch Veränderungen der Produktionsbedingungen oder durch Aussondern von fehlerhaften Vorprodukten kann eine gleichbleibende Qualität erzielt werden.

Ausführungsbeispiele, aus denen sich weitere erfinderische Merkmale ergeben, sind in den Zeichnungen dargestellt. Es zeigen:

Abb. 1

Eine schematische Ansicht einer Vorrichtung zur gleichzeitigen Bestimmung der SWK und der TLF im Hochtemperaturbereich bis über 2000°C

Abb. 2

Eine schematische Ansicht einer Vorrichtung zur gleichzeitigen Bestimmung der SWK und TLF im Niedrigtemperaturbereich von RT bis maximal 200°C

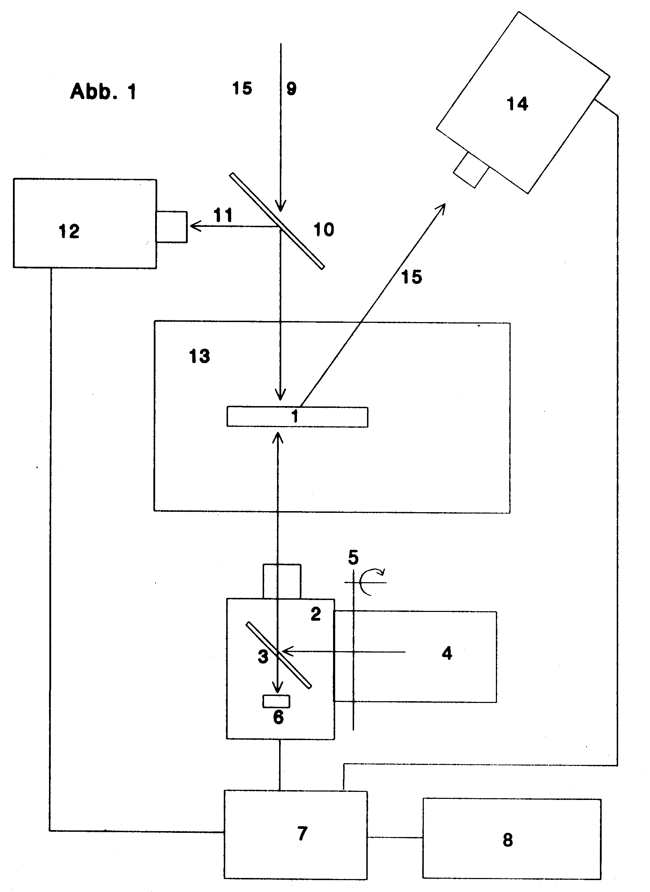

In Abb. 1 ist eine Vorrichtung mit heiz- oder kühlbaren Probenkammer 13 schematisch dargestellt, mit welcher der Emissionsgrad der Meß- und Referenzprobe 1 nacheinander bestimmt werden. Dazu wird mit dem Hochgeschwindigkeitspyrometer 2, welches einen Umlenkspiegel 3 und einen Chopper 5 enthält, die Strahlung einer Strahlungsquelle 4 auf die Rückseite der Probe 1 gerichtet. Die von der Rückseite der Probe reflektierte Strahlung wird einem Sensor 6 zugeführt. Das Signal am Sensor 6 wird in der Elektronik 7 verstärkt, digitalisiert und einer rechnergesteuerten Auswerteeinheit 8 zugeführt, wo es zur Ermittlung des Emissionsvermögens, der absoluten Temperatur und der Temperaturerhöhung an der Probenrückseite verwendet wird.

An der Probenvorderseite wird das Absorptionsvermögen der Laserstrahls 9 bestimmt. Dazu wird in den Strahlengang des Lasers 9 ein halbdurchlässiger Spiegel 10 eingebracht, mit dem die von der Probenvorderseite reflektierte Strahlung 11 ausgekoppelt und auf einen Strahlungs-Sensor 12 gegeben wird. Die Meßwerte werden der Elektronik 7 und der rechnergesteuerten Auswerteeinheit 8 zugeführt. Alternativ kann die reflektierte Strahlung 15 und/oder die Wärmestrahlung 15 infolge des Wärmepulses mit einem Pyrometer 14 unter einem Winkel ohne Verwendung eines halbdurchlässigen Spiegels direkt bestimmt werden.

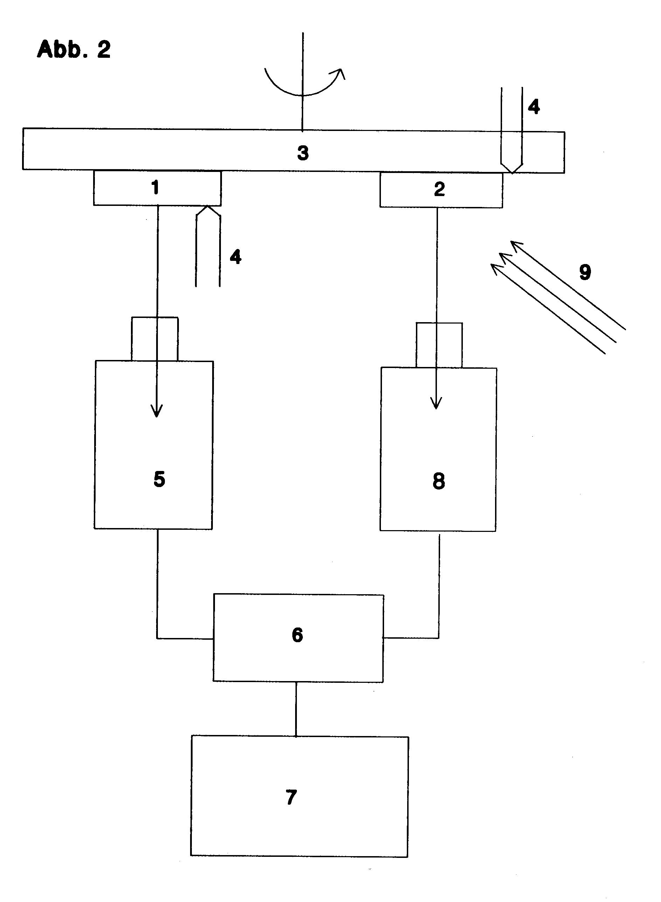

In Abb. 2 ist eine Vorrichtung für den Niedrigtemperaturbereich schematisch dargestellt. Die Meß- und Referenzproben 1,2 werden jeweils mit der Vorder- und Rückseite zum Pyrometer 5,8 auf einer drehbaren Heizplatte 3 befestigt und an definierten Stellen 4 die Probentemperatur mit einem berührenden oder berührungslosen Verfahren gemessen. Das Pyrometer 5 dient zur Messung der Infrarotstrahlung. Die Meßspannung wird mit Hilfe der Elektronik 6 verstärkt; mittels der Temperatur an der Meßstelle 4 und mittels der Datenverarbeitungseinheit 7 wird der Emissionsgrad der Probenvorder- und -rückseite ermittelt. Der Strahlungssensor 8 nimmt die an der Meß- und Referenzprobe 1,2 reflektierte Strahlung 9 vorzugsweise einer Xenonentladungslampe auf, um den Reflektiongrad zu ermitteln. Diese Meßwerte werden wiederum der Elektronik 6 und Datenverarbeitungseinheit 7 zur Auswertung zugeführt, wo das Emissions- und Absorptionsvermögen der Probenoberflächen bestimmt werden.

## Patentansprüche

1. Verfahren zur kontaktlosen Untersuchung der spezifischen Wärmekapazität von festen oder flüssigen Prüfkörpern, bei dem gegen den Prüfkörper ein Einzelpuls oder eine Pulsfolge eines elektromagnetischen Anregungsstrahl geworfen wird, und die Wirkung des dabei örtlich und zeitlich induzierten Wärmepulses als vom Körper ausgehende Infrarotstrahlung gemessen wird,
dadurch gekennzeichnet,
daß für die Prüfkörperoberflächen die durch den Wärmepuls induzierte Infrarotstrahlung als absolute Temperaturerhöhung angegeben wird,
daß die induzierte Wärmemenge mit Hilfe einer Referenzprobe ermittelt wird,
daß die Masse des Prüfkörpers und der Referenzprobe bestimmt wird und
daß mittels dieser Meßwerte gleichzeitig die SWK, die TLF und die WLF bestimmt werden.

2. Verfahren nach Anspruch 1, dadurch gekennzeichnet, daß die Länge und/oder die Intensität des Einzelpulses und/oder die Pulsfolge des Anregungsstrahls variiert werden.

3. Verfahren nach Anspruch 1, dadurch gekennzeichnet, daß zur Bestimmung der absoluten Temperaturerhöhung ein infrarotstrahlungsempfindlicher Temperatursensor, vorzugsweise ein Hochgeschwindigkeits-Pyrometer verwendet wird.

4. Verfahren nach Anspruch 1 bis 3, dadurch gekennzeichnet, daß zur Bestimmung der absoluten Temperaturerhöhung der Probenvorder- und -rückseite, induziert durch den elektromagnetischen Anregungsstrahl, das Reflektions-, Emissions- und Absorptionsvermögen der Prüfkörper- und Referenzproben-Oberflächen verwendet werden.

5. Verfahren nach Anspruch 1, dadurch gekennzeichnet, daß das Emissionsvermögen der Prüfkörper- und Referenzprobenoberflächen alternativ mittels einer Heizvorrichtung bestimmt wird.

6. Verfahren nach Anspruch 1 bis 5, dadurch gekennzeichnet, daß die Werkstoffeigenschaften SWK, TLF und WLF zur Qualitätssicherung und Prozeßkontrolle an Werkstoffen aus der industriellen Produktion, vorzugsweise Metallen, Legierungen, Keramiken, Kunststoffen, Glas und Flüssigkeiten verwendet werden.

7. Vorrichtung zur Durchführung des Verfahrens nach den Ansprüchen 1 bis 5,
gekennzeichnet durch
einen elektromagnetischen Anregungsstrahl 9 zur Erzeugung eines Einzelwärmepulses oder einer Pulsfolge auf der Oberfläche eines Prüfkörpers oder Referenzprobe 1 und einen halbdurchlässigen Spiegel 10 im Strahlengang des Anregungsstrahls 9, der die von der Probenoberfläche reflektierte Strahlung 11 und die gleichzeitig induzierte Wärmestrahlung 11 auf einen Strahlungssensor 12 lenkt, dessen Signal mittels Elektronik 7 aufbereitet und zwecks Auswertung der Meßwerte an einen Rechner 8 angeschlossen ist
und
ein Pyrometer 2, vorzugsweise eine Hochgeschwindigkeitspyrometer, welches einen halbdurchlässigen Umlenkspiegel 3, einen Chopper 5 und eine Meßstrahlungsquelle 4 enthält, deren Strahlung mittels Umlenkspiegel 3 gegen die Probe 1 gerichtet ist, dergestalt daß die reflektierte Strahlung mit dem Sensor 6 detektiert, mit der Elektronik 7 aufbereitet und dem Rechner 8 ausgewertet wird.

8. Vorrichtung zur Durchführung des Verfahrens nach dem Anspruch 13,
gekennzeichnet durch
ein Pyrometer 14, das unter einem Neigungs-Winkel zur Probenoberfläche 1 angeordnet ist, und das die von der Probenoberfläche reflektierte Strahlung 15 und die induzierte Wärmestrahlung 15 detektiert, und dessen Signal mittels Elektronik 7 aufbereitet und zwecks Auswertung der Meßwerte an einen Rechner 8 angeschlossen ist.

9. Vorrichtung zur Durchführung des Verfahrens nach den Ansprüchen 1 bis 5,
gekennzeichnet durch
eine drehbare Heizvorrichtung 3, vorzugsweise als Heizplatte ausgebildet, auf die der Prüfkörper 1 und die Referenzprobe 2 montiert werden, deren Temperatur mittels kontaktierender Sensoren 4 gemessen wird und die auf dieselbe Temperatur abgeglichen werden und
das Pyrometer 5, vorzugsweise ein Hochgeschwindigkeitspyrometer, das die von den Oberflächen der Proben 1 und 2 ausgehende Infrarotstrahlung nacheinander detektiert, mittels Elektronik 6 aufbereitet und mittels Rechner 7 auswertet
und
das Pyrometer 8, welches die reflektierte elektromagnetische Strahlung 9, vorzugsweise einer Entladungslampe, detektiert und mittels Elektronik 6 aufbereitet und Rechner 7 auswertet.

7

Abb. 1

**Abb. 2**